# EUROPÄISCHE PATENTANMELDUNG

(11) **EP 4 650 076 A1**
(43) Veröffentlichungstag der Anmeldung: **19.11.2025**
(21) Anmeldenummer: 24176674.0
(22) Anmeldetag: 17.05.2024
(51) Int. Cl.: B21D 22/20, B21D 28/26, B21D 35/00, B21D 53/88, C21D 1/673, C21D 9/46, B62D 25/02, B62D 25/04, B62D 29/00

(54) **KRAFTFAHRZEUGBAUTEIL SOWIE VERFAHREN ZU DESSEN HERSTELLUNG MITTELS WARMSCHNEIDEN**

(71) Anmelder: Benteler Automobiltechnik GmbH, 33102 Paderborn (DE)
(72) Erfinder: BUSE, Christian, 33165 Lichtenau (DE); Fortmeier, Günter, 33129 Delbrück (DE); Lütkemeyer, Oliver, 33106 Paderborn (DE); Jiao, Feng, 33098 Paderborn (DE)
(74) Vertreter: Osterhoff, Utz

(57) **Zusammenfassung**

Die Erfindung betrifft ein Kraftfahrzeugbauteil (1), hergestellt durch Warmumformen und Presshärten aus einer härtbaren Stahlblechplatine (9), wobei das Kraftfahrzeugbauteil (1) einen Verstärkungspatch (10) aufweist, welcher mit der Stahlblechplatine (9) zumindest abschnittsweise eine Doppellage (11) ausbildet, dadurch gekennzeichnet, dass das Kraftfahrzeugbauteil (1) im Bereich des Verstärkungspatches (10) eine Öffnung (12) aufweist, dergestalt, dass eine Öffnung (12) in dem Verstärkungspatch (10) ausgebildet ist und eine Öffnung (12) in der Stahlblechplatine (9), wobei eine der beiden Öffnung (14) größer ist als die andere und dass die kleinere Öffnung (13) während oder nach dem Warmumformen eingebracht ist.

## Beschreibung

Die vorliegende Erfindung betrifft ein Kraftfahrzeugbauteil hergestellt durch Warmumformen und Presshärten gemäß den Merkmalen im Oberbegriff von Anspruch 1.

Die vorliegende Erfindung betrifft weiterhin ein Verfahren zur Herstellung des Kraftfahrzeugbauteils gemäß den Merkmalen im Anspruch 10.

Aus dem Stand der Technik ist die Warmumform- und Presshärtetechnologie bekannt. Diese wird insbesondere in der Kraftfahrzeugindustrie eingesetzt um Blechbauteile für den Karosseriebau oder sonstige Kraftfahrzeugbauteile herzustellen.

Hierzu wird eine Blechplatine aus einer härtbaren Stahllegierung auf über Ac3-Temperatur erwärmt. Diese liegt in der Regel bei ca. 900° C oder höher. Man spricht auch von Austenitisierung. In diesem warmen Zustand ist das Bauteil besonders leicht umformbar. Dies wird Warmumformen genannt.

Ist das Bauteil einmal umgeformt, so wird es in einem nächsten Schritt pressgehärtet. Dieser Vorgang kann auch Abschreckhärten genannt werden. Es wird mit einer Abkühlgeschwindigkeit, welche auch als kritische Abkühlgeschwindigkeit bezeichnet werden kann, von der Temperatur über Austenitisierungtemperatur derart rasch bzw. schnell abgekühlt, dass das zuvor austenitische Gefüge in ein gehärtetes Gefüge, insbesondere martensitisches Gefüge umgewandelt wird. Hier können Zugfestigkeiten Rm von mehr als 1000 MPa, insbesondere mehr als 1300 MPa und je nach verwendeter Stahllegierung auch mehr als 1500 MPa oder mehr als 1800 MPa eingestellt werden.

Je nach Anforderung ist es notwendig solche hochfesten bzw. höchstfesten Bauteile zusätzlich zu verstärken. Dazu werden lokal Bauteilpatches bzw. Verstärkungspatches aufgebracht. Die Bauteilpatches selbst können auch aus einer härtbaren Stahllegierung hergestellt sein. Die Bauteilpatches können jedoch auch aus einer anderweitigen metallischen, insbesondere Stahllegierung, hergestellt sein. Insbesondere ist es bekannt, dass das eigentliche Kraftfahrzeugbauteil, hergestellt aus der Stahlblechplatine, zusammen mit dem Verstärkungsblech umgeformt werden. Die Verstärkungspatches können dabei mit der Stahlblechplatine gekoppelt sein, beispielsweise durch Verschweißen bzw. auch durch Kleben.

Ferner ist es bekannt, derartige Kraftfahrzeugbauteile in einem Innenbereich bzw. Binnenbereich zu schneiden bzw. zu lochen. Es kann sich beispielsweise um Öffnungen handeln, um Kabel durchzuführen, andere Bauteile anzubinden bzw. sonstige Montageöffnungen bzw. Einbauöffnungen für weitere Bauteile.

Weiterhin ist aus dem Stand der Technik hierzu das sogenannte Warmschneiden bekannt. Eine Stahlblechplatine wird hierzu in dem warmen Zustand mithin bei Austenitisierungstemperatur bzw. in einem restwarmen Zustand, mithin in einem Zustand vor vollständiger Härtung geschnitten bzw. gelocht. Mithin findet der Warmschneidevorgang vor, während oder nach dem Warmumformen, jedoch vor dem Presshärten statt.

Aufgabe der vorliegenden Erfindung ist es, ausgehend vom Stand der Technik, eine Möglichkeit aufzuzeigen, ein verstärktes Bauteil präzise und kostengünstig warmzuschneiden.

Die zuvor genannte Aufgabe wird erfindungsgemäß mit den Merkmalen im Anspruch 1 gelöst.

Ein verfahrenstechnischer Teil der Aufgabe wird weiterhin mit den Merkmalen im Anspruch 10 gelöst.

Das Kraftfahrzeugbauteil ist hergestellt durch Warmumformen und Presshärten aus einer härtbaren Stahlblechplatine. Das Kraftfahrzeugbauteil weist einen Verstärkungspatch auf, welcher mit der Stahlblechplatine zumindest abschnittsweise eine Doppellage ausbildet. Als Kraftfahrzeugbauteil können insbesondere Karosseriebauteile hergestellt werden, beispielsweise Kraftfahrzeugsäulen, so insbesondere eine A-Säule, B-Säule oder auch C-Säule. Es können jedoch auch weitere Kraftfahrzeugbauteile unter den Erfindungsaspekt fallen bzw. mit dem erfindungsgemäßen Verfahren hergestellt werden.

Zunächst wird die Stahlblechplatine mit dem Verstärkungspatch versehen. Diese werden miteinander gekoppelt. Das Koppeln kann beispielsweise mittels Kleben oder auch Verschweißen erfolgen. Die Stahlblechplatine wird mit dem Verstärkungspatch auf über Austenitisierungstemperatur gebracht und im Anschluss warmumgeformt und pressgehärtet. Im Sinne der Erfindung wäre vorrangig beschrieben, dass die Stahlblechplatine aus einer härtbaren Stahllegierung hergestellt ist. Bevorzugt ist auch der Patch bzw. die Platine des Patches aus einer härtbaren Stahllegierung ausgebildet. Die Platine des Patches kann jedoch aus einer nichthärtbaren Stahllegierung ausgebildet sein. Es wäre auch vorstellbar, dass nur die Patchplatine aus einer härtbaren Stahllegierung ausgebildet ist und die eigentliche Stahlblechplatine des Kraftfahrzeugbauteils aus einer nichthärtbaren Stahllegierung.

Damit erfindungsgemäß nunmehr im warmen Zustand ein Beschneiden bzw. Lochen in einem Innenbereich erfolgen kann, hat sich erfindungsgemäß folgende Lösung heruasgestellt. Das Kraftfahrzeugbauteil weist im Bereich des Verstärkungspatches eine Öffnung auf. Die Öffnung selbst durchgreift das Kraftfahrzeugbauteil, mithin im Querschnitt den Bereich der Stahlblechplatine und den Bereich des Verstärkungspatches vollständig. Die Öffnung durchgreift somit vollständig die Wandstärke bzw. ist aus der Wandstärke vollständig ausgeschnitten. Somit ist eine Öffnung im Bereich der Stahlblechplatine und eine Öffnung des Verstärkungspatches zu sehen. Beide Öffnungen sind im Wesentlichen miteinander fluchtend ausgebildet. Nunmehr ist erfindungsgemäß vorgesehen, dass eine der beiden Öffnungen, mithin entweder die Öffnung in der Stahlblechplatine oder die Öffnung in dem Verstärkungspatch größer ausgebildet ist als im Vergleich dazu die zweite Öffnung. Die größere Öffnung im Weiteren auch Vorloch genannt, ist erfindungsgemäß bereits vorher in ein jeweiliges Bauteil eingebracht worden, mithin in die Stahlblechplatine oder in den Verstärkungspatch im kalten und relativ weichen Ausgangszustand des Stahlmaterials.

Die zweite Öffnung, mithin die Öffnung mit der kleineren geometrischen Ausdehnung wird dann erfindungsgemäß mit dem Warmschneideprozess eingebracht. Hierbei kommt es insbesondere auf die Schneidtemperatur an, welche bevorzugt zwischen 500° C und 800° C und ganz besonders bevorzugt zwischen 600° C und 730° C beträgt. Eine zu hohe Schneidtemperatur führt zu einer unsauberen Schnittkantenausprägung und daraus resultierend zu einer höheren Gratbildung. Insbesondere aufgrund der Doppellage, mithin ein Aneinanderliegen von Stahlblechplatine und Verstärkungspatch, ist die Temperatur in diesem Bereich jedoch höher bzw. länger anhaltend aufgrund der größeren Wärmekapazität der Doppellage.

Bevorzugt wird jedoch zumindest die Lochung bei einer Martensit-Stahltemperatur größer 450° C der jeweiligen Stahllegierung eingebracht.

Besonders bevorzugt sind die Öffnungen in ihrem Querschnitt selbst rund ausgebildet. Erfindungsgemäß wird somit das Schneiden als Lochen im Innenbereich ausgeführt. Es wäre jedoch auch eine andere Querschnittsgeometrie der Öffnung möglich. Mithin kann die Öffnung kreisrund ausgebildet sein, jedoch auch polygonal oder oval.

Weiterhin hat es sich als vorteilig erwiesen, wenn die kleinere Öffnung um mindestens 5 % kleiner ist als die größere Öffnung. Insbesondere ist die kleinere Öffnung um 6 % bis 20 % kleiner als die größere Öffnung. Die kleinere Öffnung sollte jedoch nicht um mehr als 50 % kleiner sein als die größere Öffnung.

Unter Einhaltung der vorgenannten Parameter ist es insbesondere im Rahmen der Erfindung möglich, in der durch das Warmschneiden eingebrachten Öffnung ein nahezu gratfreien Randbeschnitt durchzuführen. Der Grat weist jedoch insbesondere eine Länge kleiner 0,3 mm, insbesondere kleiner 0,2 mm auf.

Es kann auch von dem im Durchmesser kleineren Loch ein Grat ausgebildet sein, welcher dann in das größere Loch hineinragt. Bevorzugt schließt dann der Grat maximal bündig auf der gegenüberliegenden Seite des größeren Loches ab. Mithin steht der Grat gegenüber der Platine des kleineren Loches über, ragt jedoch nicht nach außen über die Platine mit dem größeren Loch hinüber. Hierdurch wird ein zusätzlicher Formschluss erzeugt. Der Grat kann in diesem Falle auch als Durchzug bezeichnet werden.

Ebenfalls ist es möglich, im Bereich der Wandung der Öffnung einen Glattschnittanteil größer 30 %, insbesondere größer 40 % und besonders bevorzugt von annähernd 50 % herzustellen.

Es hat sich als weiterhin bevorzugt im Sinne der Erfindung erwiesen, wenn die kleinere Öffnung einen Kragen aufweist, welcher zumindest abschnittsweise in die größere Öffnung hinragt. Der Kragen kann dabei hergestellt werden, entweder direkt beim Lochen bzw. Stanzen, wobei der Kragen vor Abschluss des Presshärtens geformt ist. Auch kann zunächst gelocht werden und danach ein Kragenziehen stattfinden.

Es hat sich als weiterhin vorteilig erwiesen, wenn in die kleinere Öffnung unmittelbar ein selbststanzendes Verbindungelement eingebracht ist, welches die kleinere Öffnung insbesondere teilweise verschließt. Es kann sich hierbei besonders bevorzugt um eine Stanzmutter handeln. Weiterhin besonders bevorzugt kann das danach selbststanzende Verbindungselement, insbesondere die Stanzmutter, zumindest teilweise in die größere Öffnung hineinragen.

Das erfindungsgemäße Kraftfahrzeugbauteil wird mit einem Verfahren hergestellt, welches folgende Merkmale aufweist:
- Bereitstellen einer härtbaren Stahlblechplatine und eines Verstärkungspatches und Einbringen einer größeren Öffnung in eines der beiden Teile,
- Koppeln der beiden Teile, dergestalt, dass die Stahlblechplatine und das Verstärkungspatch eine Doppellage ausbilden,
- Erwärmen auf über Ac3-Temperatur,
- Warmschneiden einer kleineren Öffnung, wobei ein Schneidewerkzeug durch die größere Öffnung schneidet,
- Warmumformen, wobei die Schneideoperation während oder nach der Warmumformung durchgeführt wird,
- Presshärten des so umgeformten Kraftfahrzeugbauteils.

Zunächst werden somit die einzelnen Teile bereitgestellt. Dies ist zum einen eine Stahlblechplatine aus einer härtbaren Stahllegierung sowie ein Verstärkungspatch. Diese beiden werden miteinander gekoppelt, was insbesondere Verschweißen hergestellt wird. Die Stahlblechplatine mit Verstärkungspatch wird dann auf über Ac3-Temperatur erwärmt.

Eines der beiden Teile ist bereits mit einer Öffnung versehen, welches die größere Öffnung ist. Das dann erwärmte Vormaterial, mithin die Stahlblechplatine mit dem Verstärkungspatch wird in ein Warmumformwerkzeug eingelegt. Insbesondere handelt es sich dabei um ein Warmumformwerkzeug mit einem kombinierten Schneidwerkzeug bzw. Stanzwerkzeug. Insbesondere kann somit während oder nach dem Warmumformen der Schneidvorgang ausgeführt werden. Bevorzugt wird dies bei einer Temperatur von 500° C bis 800° C durchgeführt. Durch den zunächst Werkzeugkontakt mit dem Warmumformwerkzeug kühlt sich die erwärmte Stahlblechplatine ab. Insbesondere wird jedoch der Schneidvorgang durchgeführt bevor das eigentliche Presshärten, mithin ein beispielsweise Flüssigkeits- oder Wasserkühlen des Warmumformwerkzeuges stattfindet. Somit kann insbesondere sichergestellt werden, dass eine optimale Schneidtemperatur zwischen 550° C und 800° C eingehalten wird. Im Anschluss wird dann der Presshärtevorgang durchgeführt und das somit gehärtete Bauteil wird bevorzugt mit einer Zugfestigkeit von Rm über 1000 MPa, insbesondere größer 1300 MPa, und besonders bevorzugt größer über 1500 MPa entnommen. Die hergestellten Öffnungen innerhalb des Bauteil weisen somit einen höchsten Grad an Präzision auf, wobei das Loch- bzw. Schneidwerkzeug einen nur geringen Verschleiß aufgrund des Warmschneidevorganges erfährt.

Weitere Vorteile, Merkmale und Eigenschaften der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung. Es zeigen:
- Figur 1a +b: den Einsatz eines erfindungsgemäßen Verstärkungsbauteils eines Kraftfahrzeugbauteils,
- Figur 2a - e: eine erste Ausgestaltungsvariante der vorliegenden Erfindung mit Vorloch in der Stahlblechplatine, Umformung zum Kraftfahrzeugteil und Lochen des Verstärkungspatches,
- Figur 3: eine zweite Ausführungsvariante der vorliegenden Erfindung mit Vorlochen des Verstärkungspatches und Lochen der umgeformten Stahlblechplatine,
- Figur 4: eine dritte Ausgestaltungsvariante der vorliegenden Erfindung,
- Figur 5a - e: eine weitere Ausgestaltungsvariante der Erfindung mit Einbringen einer Stanzmutter.

In den Figuren werden für gleiche und ähnliche Bauteile dieselben Bezugszeichen verwendet, auch wenn eine wiederholte Beschreibung oder Platzierung aus Vereinfachungsgründen entfällt. Die zuvor und nachfolgend beschriebenen Ausführungsformen können beliebig im Rahmen der Erfindung untereinander kombiniert werden, ohne den Rahmen zu verlassen.

Insbesondere wird für die Stahlblechplatine alternativ oder ergänzend auch für den Vestärkungspatch eine Stahllegierung ausgewählt, welche beispielsweise in der nachfolgend beschriebenen Tabelle als Stahl A, B, C oder D beschrieben ist. Die jeweils andere der beiden Platinen kann dann aus dem gleichen Stahl, aber auch aus einem der nicht härtbaren Stähle E oder F gebildet sein. Die Angabe der Legierungselemente ist in Gew.-%, Rest Eisen und erschmelzungsbedingte Verunreinigungen;

| | **C** | | **Si** | | **Mn** | | **P** | **S** | **Al** | | **B** | | **Cr** | | **Cu** | **N** | **Nb** | | **Ni** | | **Ti** | | **V** | **Mo** |
|---|---|---|---|---|---|---|---|---|---|---|---|---|---|---|---|---|---|---|---|---|---|---|---|---|
| | min | max | min | max | min | max | max | max | min | max | min | max | min | max | max | max | min | max | min | max | min | max | max | max |
| Stahl A | 0.19 | 0.25 | 0.1 | 0.4 | 1.1 | 1.4 | 0.02 | 0.005 | 0 | 0.06 | 0.004 | 0.1 | | 0.3 | 0.1 | | | 0.05-Ti | 0.02 | 0.1 | 0.01 | 0.1 | | 0.35 |
| Stahl B | 0.2 | 0.23 | 0.2 | 0,3 | 1.1 | 1.4 | 002 | 0.005 | 0 | 0.06 | 0.004 | 0.1 | 0.1 | 0.3 | 0.1 | 0.01 | | 0.05-Ti | 0.02 | 0.1 | 0.02 | 0.05 | 0.01 | 0.35 |
| Stahl C | 0.31 | 037 | 0.1 | 0.6 | 1 | 1.5 | 0.025 | 0.02 | | 0.1 | 0.001 | 0.004 | 0.08 | 0.35 | 0.2 | 0.2 | | 0.1 | | 0.2 | 0.002 | 0.05 | | 0.35 |
| Stahl D | 0.33 | 0.35 | 0.15 | 0.35 | 1 | 1.5 | 0.025 | 0.015 | 0.01 | 0.08 | 0.001 | 0.004 | 0.08 | 0.5-Mo | 0.2 | 0.2 | 0.01 | 0.06 | | 0.2 | 0.005 | 0.015 | 0.01 | 0.5-Cr |
| Stahl E | 0.06 | 0.13 | | 0.7 | | 1.9 | 005 | 0.05 | | 0.11 | | 0.003 | | 0.15 | 0.2 | 02 | | 0.1 | | | | 1.2 | 0.1 | 0.1 |
| Stahl F | 0.07 | 0.11 | 0.02 | 06 | 1.2 | 1.8 | 003 | 0.01 | 0.01 | 0.07 | 0.0007 | 0.002 | | 015 | 0.2 | 0.2 | 0.04 | 0.1 | | | 0.03 | 0.2 | 0.1 | 0.1 |
| | | | | | | | | | | | | | | | | | | | | | | | | |

Für alle Stähle ist es möglich, diese vor dem Warmformen mit eine vor Korrosion und Verzunderung schützenden metallischen Vorbeschichtung zu versehen, insbesondere einer AlSi-Legierung oder einer Zn-Legierung oder einer mehrlagigen Kombination daraus.

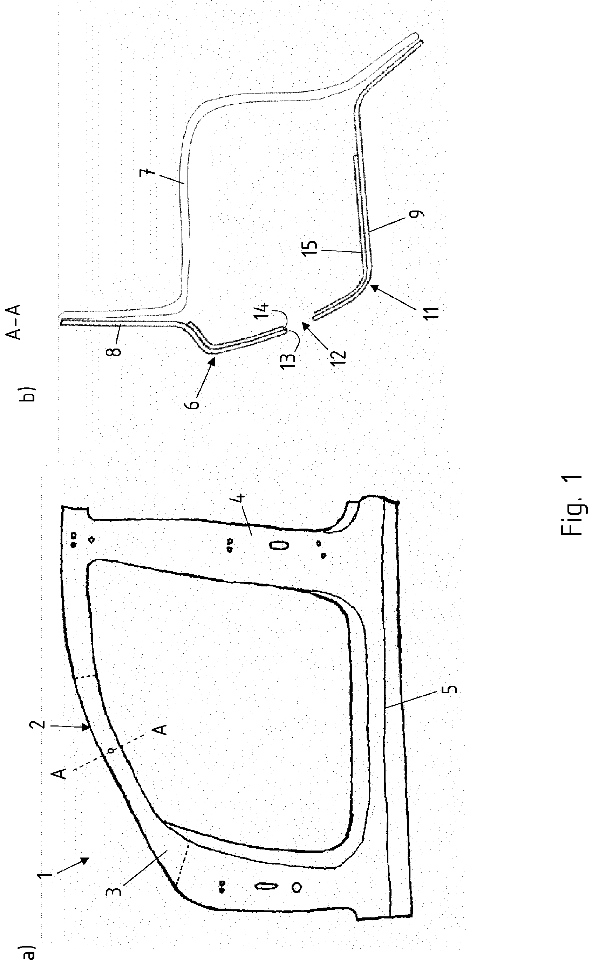

Figur 1a und 1b zeigen den Einsatz eines erfindungsgemäßen Verstärkungsbauteils eines Kraftfahrzeugbauteils 1, hier in Form eines Türrings 2 bzw. einer kombinierten A- und B-Säule 2, 3 mit Schweller 5. Der Türring 2 kann auch Door ring genannt werden.

Figur 1b zeigt dabei eine Querschnittsansicht gemäß der Schnittlinie A-A. Zu sehen ist, dass der Bereich der A-Säule 2 im Querschnitt ein geschlossenes Hohlprofil ausgebildet ist durch zwei aneinander liegende hutförmige bzw. C-förmige Profile. Eine innenliegende Schale 6 ist dabei als das erfindungsgemäße Kraftfahrzeugbauteil 1 ausgebildet und mit einer außenliegenden Schale 7 über jeweils einen Flansch 8 gekoppelt. Die Innenschale 6 ist dazu aus einer ungeformten Stahlblechplatine 9 ausgebildet und weist zusätzlich einen Verstärkungspatch 10 auf, so dass in diesem Bereich eine Doppellage 11 ausgebildet ist. Insgesamt ist somit eine Öffnung 12 ausgebildet, welche die Doppellage 11 durchgreift. Hierzu ist eine kleinere Öffnung 13 sowie relativ dazu gesehen größere Öffnung 14 ausgebildet.

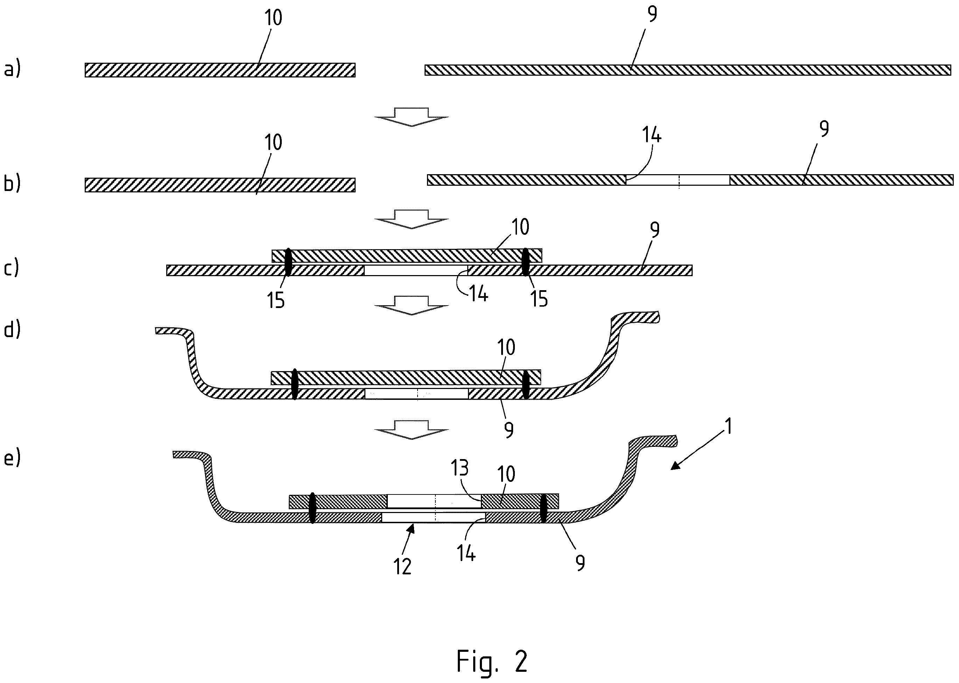

Das erfindungsgemäße Herstellungsverfahren ist dann weiter in Figur 2a bis 2e beschrieben. Zunächst wird eine Stahlblechplatine 9 bereitgestellt und in die Stahlblechplatine 9 eine Öffnung 12 eingebracht. Hierbei kann es sich beispielsweise um ein Vorlochen in der Stahlblechplatine 9 handeln. In diesem Fall ist dies die größere Öffnung 14, die eingebracht wird. Beispielsweise kann es sich um einen kreisrunden Ausschnitt handeln, welcher dann einen entsprechenden Durchmesser aufweist. Es wird dann gemäß Figur 2 ein Verstärkungspatch 10 aufgesetzt und beispielsweise über Punktschweißungen 15 mit der Stahlblechplatine 9 gekoppelt. Gemäß Figur 2d findet dann ein Warmumformvorgang statt, dergestalt, dass ein Formgebungsprozess stattfindet. Aus Vereinfachungsgründen ist im Formgebungsprozess der Bereich der Öffnung 12 gerade dargestellt. Dieser kann jedoch auch dreidimensional, beispielsweise in einem Tiefziehprozess oder sonstigem Umformprozess umgeformt werden. Ebenfalls liegen Verstärkungspatch 10 und Stahlblechplatine 9 annähernd spaltfrei aneinander an, was hier aus Vereinfachungsgründen mit einem minimalen Sichtspalt gegeben ist. Dann wird nach erfolgter Warmumformung eine kleinere Öffnung 13 in den Verstärkungspatch 10 eingebracht. Mit einem nicht näher dargestellten Lochstempel erfolgt dies entweder durch die größere Öffnung 14 hindurch, mithin auf die Bildebene von unten nach oben. Alternativ kann der Lochstempel 15 auch von hinten an das Verstärkungspatch 10 herangeführt werden und auf die Bildebene bezogen von oben nach unten durchgeführt werden, so dass der Stanzausschnitt durch die größere Öffnung 14 herausfällt. Im Anschluss daran findet ein Presshärtevorgang statt und das Bauteil ist somit warmumgeformt und pressgehärtet und weist eine besonders hohe Zugfestigkeit Rm auf.

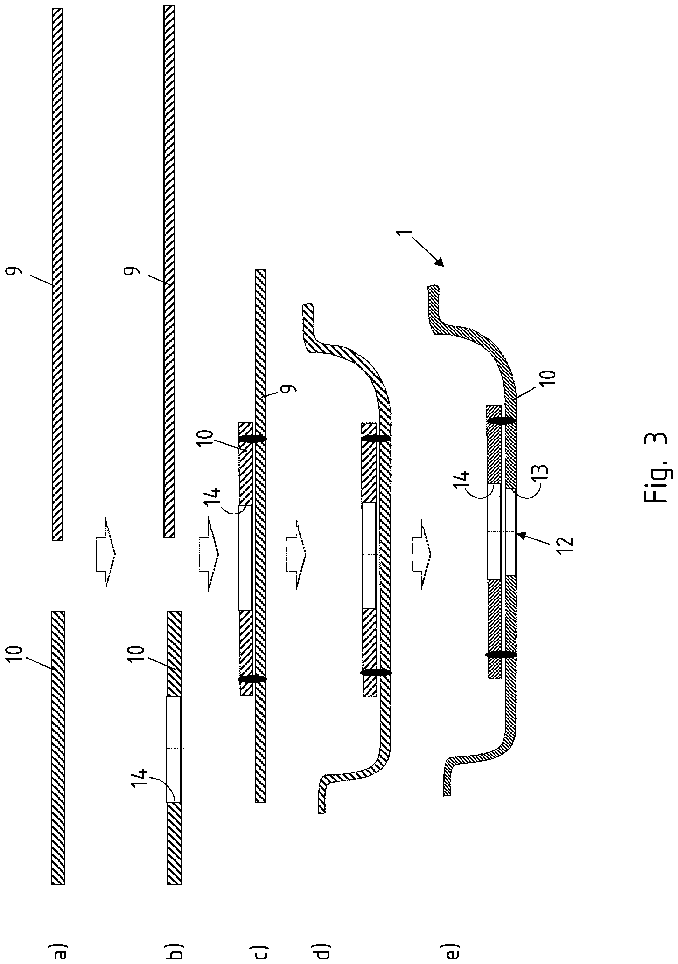

Figuren 3a bis 3e zeigen einen analogen Vorgang. Hierbei wird jedoch das Vorlochen nicht an der Stahlblechplatine 9, sondern an dem Verstärkungspatch 10 ausgeführt. Die größere Öffnung 14 befindet sich somit in dem Verstärkungspatch 9. Die kleinere Öffnung 13 wird somit während oder nach dem Warmumformvorgang gemäß Figur 3e in der umgeformten Stahlblechplatine 9 hergestellt.

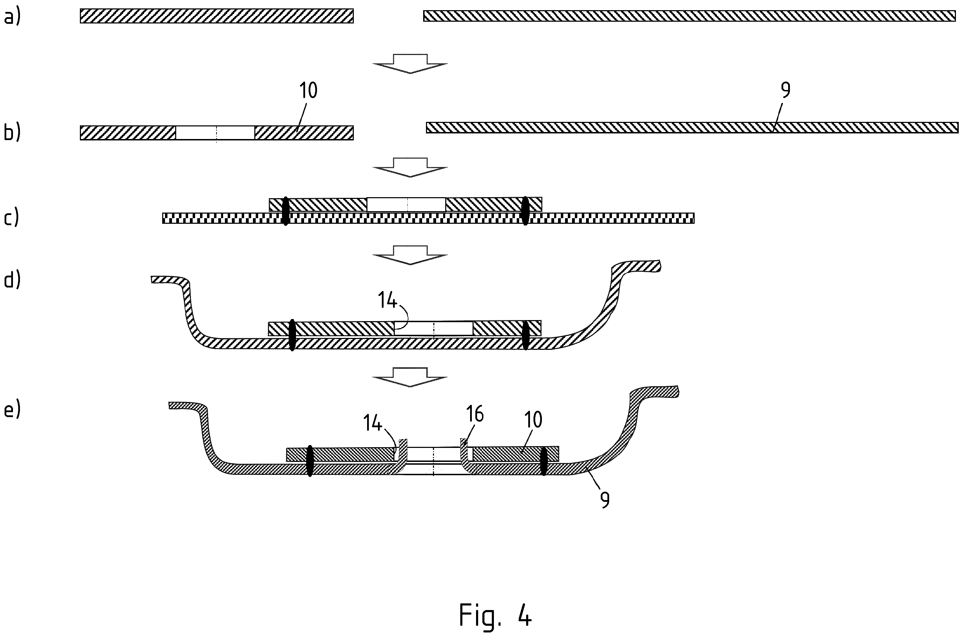

Figuren 4a bis 4e zeigen ebenfalls einen analogen Vorgang. Hierbei wird auch das Verstärkungspatch 10 vorgelocht. Im Unterschied zu den Figuren 2 und 3 wird jedoch nicht eine vollständige kleinere Öffnung 13 hergestellt, sondern die kleinere Öffnung 13 nach dem Prinzip eines Kragenziehens durch die größere Öffnung 14 geführt.

Somit ist der Verbund von Verstärkungspatch 10 und umgeformter Stahlblechplatine 9 noch verstärkt. Ebenfalls können hier vereinfacht Montagen durchgeführt werden, beispielsweise kann in den Kragen 16 ein Gewinde eingeschraubt werden bzw. Kabel hindurchgezogen werden.

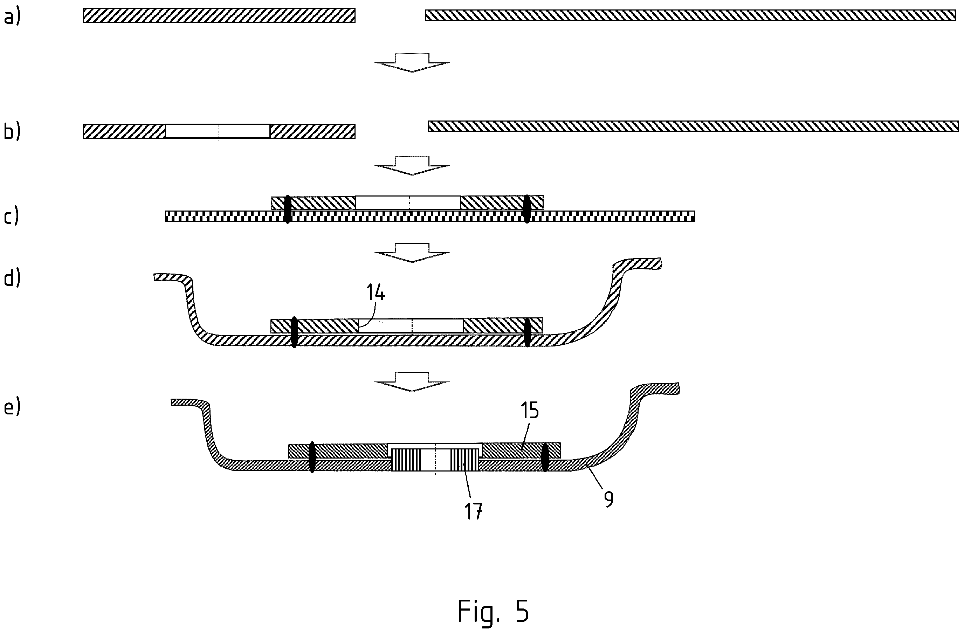

Figur 5a bis 5e zeigt einen analogen Vorgang zu Figur 4 mit dem Unterschied, dass hier kein Kragen 16 durchgezogen wird. Es wird ein Stanzbauteil, hier in Form einer Einstanzmutter 17, in die warmumgeformte Stahlblechplatine 9 eingebracht. Die Einstanzmutter 17 kann durch formschlüssige Verbindung des Stanzvorganges fixiert sein. Es kann jedoch auch ein Schweißvorgang mit stattfinden.

Die Ausführungsformen gemäß Figur 4 und 5 können hinsichtlich der Position des größeren Vorloches in der Verstärkungsplatine auch abgeändert werden, so dass das größere Vorloch wie in Figur 2 in der Stahlblechplatine ausgebildet ist.

### Bezugszeichen:

- 1 -: Kraftfahrzeugbauteil
- 2 -: Türring
- 3 -: A-Säule
- 4 -: B-Säule
- 5 -: Schweller
- 6 -: innenliegende Schale
- 7 -: außenliegende Schale
- 8 -: Flansch
- 9 -: Stahlblechplatine
- 10 -: Verstärkungspatch
- 11 -: Doppellage
- 12 -: Öffnung
- 13 -: kleinere Öffnung
- 14 -: größere Öffnung
- 15 -: Punktschweißung
- 16 -: Kragen
- 17 -: Einstanzmutter

## Patentansprüche

1. Kraftfahrzeugbauteil (1), hergestellt durch Warmumformen und Presshärten aus einer härtbaren Stahlblechplatine (9), wobei das Kraftfahrzeugbauteil (1) einen Verstärkungspatch (10) aufweist, welcher mit der Stahlblechplatine (9) zumindest abschnittsweise eine Doppellage (11) ausbildet, **dadurch gekennzeichnet, dass** das Kraftfahrzeugbauteil (1) im Bereich des Verstärkungspatches (10) eine durchgängige Öffnung (12) aufweist, dergestalt, dass eine Öffnung (14) in dem Verstärkungspatch (10) ausgebildet ist und eine Öffnung (13) in der Stahlblechplatine (9), wobei eine der beiden Öffnungen (13, 14) größer ist als die andere und dass die kleinere Öffnung (13, 14) während oder nach dem Warmumformen eingebracht ist.

2. Kraftfahrzeugbauteil (1) nach Anspruch 1, **dadurch gekennzeichnet, dass** die Öffnungen (12, 14) im Querschnitt rund ausgebildet sind.

3. Kraftfahrzeugbauteil (1) nach einem der vorgenannten Ansprüche, **dadurch gekennzeichnet, dass** die größere Öffnung (14) in der Stahlblechplatine (9) eingebracht ist und dass die relativ dazu kleinere Öffnung (13) in dem Verstärkungspatch (10) eingebracht ist oder dass die größere Öffnung (14) in dem Verstärkungspatch (10) eingebracht ist und die relativ dazu kleinere Öffnung (13) in der Stahlblechplatine (9) eingebracht ist.

4. Kraftfahrzeugbauteil (1) nach einem der vorgenannten Ansprüche, **dadurch gekennzeichnet, dass** die kleinere Öffnung (13) um mindestens 5 % kleiner ist, als die größere Öffnung (14), insbesondere ist die kleinere Öffnung (13) um 6 % bis 20 % kleiner als die größere Öffnung (14).

5. Kraftfahrzeugbauteil (1) nach einem der vorgenannten Ansprüche, **dadurch gekennzeichnet, dass** ein Lochrand der kleineren Öffnung (13) nach dem Presshärten einen Grat aufweist, dessen Länge kleiner 0,3 mm, insbesondere kleiner 0,2 mm ist.

6. Kraftfahrzeugbauteil (1) nach einem der vorgenannten Ansprüche, **dadurch gekennzeichnet, dass** die Wandung der kleineren Öffnung (13) einen Glattschnittanteil größer 25 %, insbesondere größer 40 % aufweist.

7. Kraftfahrzeugbauteil (1) nach einem der vorgenannten Ansprüche, **dadurch gekennzeichnet, dass** die kleinere Öffnung (13) einen Kragen (16) aufweist, welcher zumindest abschnittswiese in die größere Öffnung (14) hineinragt.

8. Kraftfahrzeugbauteil (1) nach einem der vorgenannten Ansprüche, **dadurch gekennzeichnet, dass** die kleinere Öffnung (13) durch ein selbststanzendes Verbindungselement wenigstens teilweise verschlossen ist, insbesondere ist die kleinere Öffnung (13) selbst durch eine Stanzmutter gelocht und teilweise verschlossen.

9. Kraftfahrzeugbauteil (1) nach einem der vorgenannten Ansprüche, **dadurch gekennzeichnet, dass** das selbststanzende Verbindungselement zumindest teilweise in die größere Öffnung (14) hineinragt.

10. Verfahren zur Herstellung eines Kraftfahrzeugbauteils (1) mit den Merkmalen von Anspruch 1, **gekennzeichnet durch** folgende Verfahrensschritte:
- Bereitstellen einer härtbaren Stahlblechplatine (9) und eines Verstärkungspatches (10) und Einbringen einer größeren Öffnung (14) in eines der beiden Teile,
- Koppeln der beiden Teile, dergestalt, dass die Stahlblechplatine (9) und das Verstärkungspatch (10) eine Doppellage (11) ausbilden,
- Erwärmen auf über Ac3-Temperatur,
- Warmschneiden einer kleineren Öffnung (13), wobei ein Schneidewerkzeug durch die größere Öffnung (14) schneidet,
- Warmumformen, wobei die Schneideoperation während oder nach der Warmumformung durchgeführt wird,
- Presshärten des so umgeformten Kraftfahrzeugbauteils (1).

11. Kraftfahrzeugbauteil (1) nach Anspruch 10, **dadurch gekennzeichnet, dass** bei einer Temperatur zwischen 500° C und 800°°C, insbesondere zwischen 600° C und 730°°C geschnitten wird.

## Geänderte Patentansprüche

### Geänderte Patentansprüche gemäss Regel 137(2) EPÜ.

1. Verfahren zur Herstellung eines Kraftfahrzeugbauteils (1), **gekennzeichnet durch** folgende Verfahrensschritte:
- Bereitstellen einer härtbaren Stahlblechplatine (9) und eines Verstärkungspatches (10) und Einbringen einer größeren Öffnung (14) in eines der beiden Teile,
- Koppeln der beiden Teile, dergestalt, dass die Stahlblechplatine (9) und das Verstärkungspatch (10) zumindest abschnittsweise eine Doppellage (11) ausbilden,
- Erwärmen auf über Ac3-Temperatur,
- Warmschneiden einer kleineren Öffnung (13), wobei ein Schneidewerkzeug durch die größere Öffnung (14) schneidet,
- Warmumformen, wobei die Schneideoperation während oder nach der Warmumformung durchgeführt wird,
- Presshärten des so umgeformten Kraftfahrzeugbauteils (1).

2. Verfahren zur Herstellung eines Kraftfahrzeugbauteils (1) nach Anspruch 1, **dadurch gekennzeichnet, dass** bei einer Temperatur zwischen 500° C und 800°°C, insbesondere zwischen 600° C und 730°°C geschnitten wird.

3. Verfahren zur Herstellung eines Kraftfahrzeugbauteils (1) nach Anspruch 1 oder 2, **dadurch gekennzeichnet, dass** die Öffnungen (12, 14) im Querschnitt rund ausgebildet wird.

4. Verfahren zur Herstellung eines Kraftfahrzeugbauteils (1) nach einem der vorgenannten Ansprüche, **dadurch gekennzeichnet, dass** die größere Öffnung (14) in der Stahlblechplatine (9) eingebracht ist und dass die relativ dazu kleinere Öffnung (13) in dem Verstärkungspatch (10) eingebracht wird oder dass die größere Öffnung (14) in dem Verstärkungspatch (10) eingebracht ist und die relativ dazu kleinere Öffnung (13) in der Stahlblechplatine (9) eingebracht wird.

5. Verfahren zur Herstellung eines Kraftfahrzeugbauteils (1) nach einem der vorgenannten Ansprüche, **dadurch gekennzeichnet, dass** die kleinere Öffnung (13) um mindestens 5 % kleiner ist, als die größere Öffnung (14), insbesondere ist die kleinere Öffnung (13) um 6 % bis 20 % kleiner als die größere Öffnung (14).

6. Verfahren zur Herstellung eines Kraftfahrzeugbauteils (1) nach einem der vorgenannten Ansprüche, **dadurch gekennzeichnet, dass** ein Lochrand der kleineren Öffnung (13) nach dem Presshärten einen Grat aufweist, dessen Länge kleiner 0,3 mm, insbesondere kleiner 0,2 mm ist.

7. Verfahren zur Herstellung eines Kraftfahrzeugbauteils (1) nach einem der vorgenannten Ansprüche, **dadurch gekennzeichnet, dass** die Wandung der kleineren Öffnung (13) einen Glattschnittanteil größer 25 %, insbesondere größer 40 % aufweist.

8. Verfahren zur Herstellung eines Kraftfahrzeugbauteils (1) nach einem der vorgenannten Ansprüche, **dadurch gekennzeichnet, dass** die kleinere Öffnung (13) einen Kragen (16) aufweist, welcher zumindest abschnittswiese in die größere Öffnung (14) hineinragt.

9. Verfahren zur Herstellung eines Kraftfahrzeugbauteils (1) nach einem der vorgenannten Ansprüche, **dadurch gekennzeichnet, dass** die kleinere Öffnung (13) durch ein selbststanzendes Verbindungselement wenigstens teilweise verschlossen ist, insbesondere ist die kleinere Öffnung (13) selbst durch eine Stanzmutter gelocht und teilweise verschlossen.

10. Verfahren zur Herstellung eines Kraftfahrzeugbauteils (1) nach dem vorherigen Anspruch, **dadurch gekennzeichnet, dass** das selbststanzende Verbindungselement zumindest teilweise in die größere Öffnung (14) hineinragt.
